(19) Europäisches Patentamt
European Patent Office
Office européen des brevets

(11) **EP 4 585 968 A1**

(12) **EUROPEAN PATENT APPLICATION**

(43) Date of publication:
**16.07.2025 Bulletin 2025/29**

(21) Application number: **24151602.0**

(22) Date of filing: **12.01.2024**

(51) International Patent Classification (IPC):
**G01S 13/56** (2006.01)   **G01S 7/41** (2006.01)
**G01S 13/93** (2020.01)   **G01S 7/40** (2006.01)
**E05F 15/73** (2015.01)

(52) Cooperative Patent Classification (CPC):
**G01S 7/415; E05F 15/73; G01S 7/4039;
G01S 13/56; G01S 13/93**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Pepperl+Fuchs SE
68307 Mannheim (DE)**

(72) Inventors:
• **ASHGAR, Sayed Zeeshan
12277 Berlin (DE)**
• **THIEN, Marcus
12277 Berlin (DE)**

(74) Representative: **Fischer, Uwe
Patentanwalt
Moritzstraße 22
13597 Berlin (DE)**

Remarks:
Claims filed after the date of filing of the application
(Rule 68(4) EPC).

(54) **SENSOR, SYSTEM AND METHOD FOR DETECTING OBSTRUCTING OBJECTS DURING THE MOVEMENT OF A DOOR LEAF**

(57)     An embodiment of the invention relates to a sensor (20) configured to detect obstructing objects (31, 32) during the movement of a door leaf (11, 11a), wherein the sensor (20) comprises a stationary radar unit (21) capable of emitting radar radiation (Re) and detecting reflected radiation (Rr), the radar unit (21) being configured to provide a Doppler signal (DS) during operation, and an evaluation unit (22) configured to evaluate the spectrum of the Doppler signal (DS) in order to detect an approaching object (31, 32, 11, 11a), wherein the evaluation unit (22) is configured to calculate an object-individual timer period (T1, T2, T3) in response to the detection of the approaching object (31, 32, 11, 11a), the timer period (T1, T2, T3) depending on the Doppler frequency (Fd1, Fd2, Fd3) that belongs to the detected object (31, 32, 11, 11a), the evaluation unit (22) is configured to start a timer for the detected object (31, 32, 11, 11a) upon its detection, and the evaluation unit (22) is configured to generate a trigger signal (TS) that triggers the opening of the door after expiry of the object-individual timer period (T1, T2, T3) if the radar unit (21) still detects the Doppler frequency (Fd1, Fd2, Fd3) that belongs to the detected object (31, 32, 11, 11a), after expiry of the object-individual timer period (T1, T2, T3).

Fig.8

EP 4 585 968 A1

**Description**

Background of the invention

Doppler-radar based sensors can be used to generate an opening impulse for automated doors and gates. These sensors send out radar radiation signals which can be reflected from objects or people, etc.

One major problem is that when a swing door is closing, the closing of the door leaf itself may generate a Doppler signal, which in turn may cause opening impulses instructing the door to open. And the cycle may continue. This may result in the door being open all the time, which is less than desirable.

Objective of the present invention

An objective of the present invention is to propose a sensor which is optimized with regard to the above-described problem of opening impulses that are caused by the door leaf itself.

Another objective of the present invention is to propose a system which is optimized with regard to the above-described problem of opening impulses that are caused by the door leaf itself.

A further objective of the present invention is to provide an improved method of detecting objects during the movement of a door leaf.

Brief summary of the invention

An embodiment of the present invention relates to a sensor configured to detect obstructing objects during the movement of a door leaf, wherein the sensor comprises a stationary radar unit capable of emitting radar radiation and detecting reflected radiation, the radar unit being configured to provide a Doppler signal during operation, and an evaluation unit configured to evaluate the spectrum of the Doppler signal in order to detect an approaching object, wherein the evaluation unit is configured to calculate an object-individual timer period in response to the detection of the approaching object, the timer period depending on the Doppler frequency that belongs to the detected object, wherein the evaluation unit is configured to start a timer for the detected object after its detection, and wherein the evaluation unit is configured to generate a trigger signal that triggers the opening of the door after expiry of the object-individual timer period if the radar unit still detects the Doppler frequency that belongs to the detected object, after expiry of the object-individual timer period.

An advantage of the above embodiment is that the generation of trigger signals in response to reflected radiation of the door leaf can be avoided because the evaluation unit may operate as a time-filter that masks the door motion completely but is still open for an approaching pedestrian.

As known in the art of Doppler radar detectors, each moving object causes a specific Doppler frequency in the spectrum of the Doppler signal. The specific Doppler frequency corresponds to the difference between the frequency of the emitted radar radiation and the frequency of the detected reflected radiation. The amount of the Doppler frequency is indicative of the speed of the object.

In view of the above, the evaluation unit is preferably configured to set the timer period to be shorter for faster approaching objects causing higher Doppler frequencies and longer for slower approaching objects causing lower Doppler frequencies. The dependence of the length of the time-filter (i.e., the length of the object-individual timer periods) on the Doppler frequency and therefore the speed takes into account that if a target is approaching at a high speed, the door should respond quickly, otherwise a person can collide with the door once the door starts opening. Furthermore, this latter approach makes the distance of the person from the door, more or less, constant, once the door starts to open, thus avoiding a possibility of collision.

The evaluation unit is configured to calculate the timer period to be inversely proportional to the Doppler frequency and therefore inversely proportional to the speed of the detected object.

The evaluation unit may be configured to set the timer period to a given maximum timer value if the Doppler frequency of the detected object is smaller than a given threshold frequency.

The threshold frequency preferably corresponds to the speed of the closing door leaf when the door is in the process of being closed.

Further, the evaluation unit may be configured to set the timer period to be shorter for higher Doppler frequencies and longer for lower Doppler frequencies if the Doppler frequency exceeds the threshold frequency.

The evaluation unit is preferably configured to calculate the timer period to be inversely proportional to the Doppler frequency of the detected object if the Doppler frequency exceeds the threshold frequency, and otherwise assigns the maximum timer value to the timer period.

The evaluation unit may be configured to calculate the object-individual timer period for the detected object according to

$$T = K \; / \; Fd \;\; if \;\; Fd > fth$$

$$T = Tmax \;\; if \;\; Fd \leq fth$$

where T designates the object-individual timer period of the detected object, Fd designates the Doppler frequency of the detected object, fth designates the threshold frequency, and Tmax designates the maximum timer period.

For instance, in order to cope with events where two or more objects are detected simultaneously or in short succession, the evaluation unit may be configured to calculate the object-individual timer period for each detected approaching object. In the latter case, the evaluation unit is preferably configured to generate a trigger signal that triggers the opening of the door after expiry of each object-individual timer period, if the radar unit still detects the Doppler frequency of the respective detected object after expiry of the respective object-individual timer period.

For instance, the evaluation unit may be configured to calculate the object-individual timer period for each detected approaching object according to

$$T(i) = K \; / \; Fd(i) \qquad if \;\; Fd(i) > fth$$

$$T(i) = Tmax \qquad if \;\; Fd(i) \leq fth$$

where T(i) designates the object-individual timer period of the i-th detected object, Fd(i) designates the Doppler frequency of the i-th detected object, fth designates the threshold frequency, and Tmax designates the maximum timer period.

Another embodiment of the invention relates to a system comprising a sensor as described above wherein the sensor is mounted stationary above a swing door. The sensor can be mounted for instance on a frame of the door or on a wall.

Another embodiment of the invention relates to a method of detecting obstructing objects during the movement of a door leaf, the method comprising the steps of emitting radar radiation and detecting reflected radiation using a stationary radar unit, determining a Doppler signal, and evaluating the spectrum of the Doppler signal in order to detect an approaching object, wherein an object-individual timer period is calculated in response to the detection of the approaching object, wherein the timer period depends on the Doppler frequency that belongs to the detected object, wherein a timer is started for the detected object upon detection of the object, and wherein a trigger signal is generated that triggers the opening of the door after expiry of the object-individual timer period if the Doppler frequency that belongs to the detected object, is still detected after expiry of the object-individual timer period.

During a calibration step, the Doppler signal generated by the closing door leaf may be detected. Then, a threshold frequency that corresponds to the Doppler frequency of the closing door leaf and therefore to the speed of the closing door leaf when the door is closed, may be stored.

During normal operation after the calibration, the timer period of the detected object may be set to be shorter for higher Doppler frequencies and longer for lower Doppler frequencies, if the Doppler frequency exceeds the threshold frequency, and otherwise a given maximum threshold value may be assigned to the timer period.

Preferably, the object-individual timer period is calculated for each detected approaching object. A trigger signal that triggers the opening of the door is preferably generated after expiry of each object-individual timer period if the Doppler frequency of the respective object is still detected after expiry of the respective object-individual timer period.

According to a preferred embodiment, the object-individual timer period is calculated for each detected approaching object according to

$$T(i) = K \; / \; Fd(i) \qquad if \;\; Fd(i) > fth$$

$$T(i) = Tmax \qquad if \;\; Fd(i) \leq fth$$

where T(i) designates the object-individual timer period of the i-th detected object, Fd(i) designates the Doppler frequency of the i-th detected object, fth designates the threshold frequency, and Tmax designates the maximum timer period.

All features as described above in connection with the sensor can also be included in said system and method of detecting obstructing objects. In other words, all features listed in the description and in the dependent claims that refer to the sensor, may also be considered as disclosed subject matter regarding the system and method.

Furthermore, all features as described above in connection with the method can also be included in said sensor and system. In other words, all features listed in the description and in the dependent claims that refer to the method, may also be considered as disclosed subject matter regarding the sensor and the system.

Brief description of the drawings

In order that the manner, in which the above-recited and other advantages of the invention are obtained, will be readily understood, a more particular description of the invention briefly described above will be rendered by reference to specific embodiments thereof, which are illustrated in the appended figures. Understanding that these figures depict only typical embodiments of the invention and are therefore not to be considered limiting of its scope, the invention will be described and explained with additional specificity and detail by the use of the accompanying drawings in which

Fig. 1-2      illustrate a front view and a top view of a single swing door that is controlled by a sensor,

Fig. 3      illustrate an exemplary embodiment of the sensor shown in Figures 1 and 2 in further detail,

Fig. 4-8      illustrate the operation of the sensor shown in Figures 1-3, and

Fig. 9-10      illustrate a front view and a top view of a double swing door that is controlled by a sensor, for instance the sensor described with reference to Figures 1-8.

Detailed description of the preferred embodiments

The preferred embodiments of the present invention will be best understood by reference to the drawings, wherein identical or comparable parts are designated by the same reference signs throughout.

It will be readily understood that the parameters of the embodiments of the present invention, as generally described herein, could vary in a wide range. Thus, the following more detailed description of exemplary embodiments of the present invention, is not intended to limit the scope of the invention but is merely representative of presently preferred embodiments of the invention.

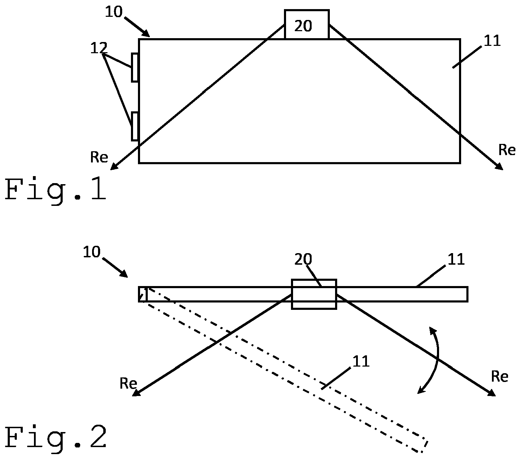

Figures 1 and 2 show a front view and a top view of a swing door 10, respectively. A door leaf 11 of the swing door 10 is rotatably mounted on a pivot axis provided by hinges 12. A sensor 20 is mounted stationarily above the door leaf on a wall or a door frame as shown in both Figures 1 and 2.

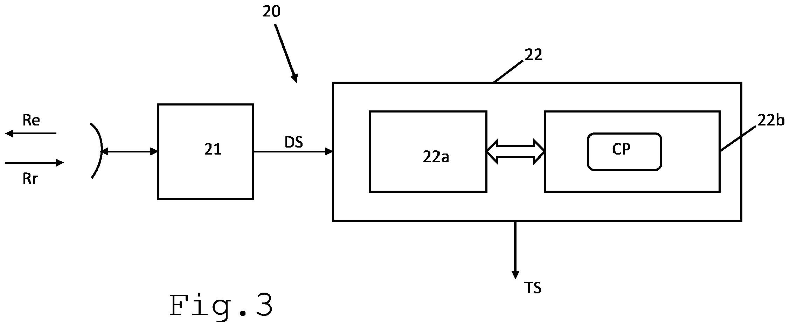

Figure 3 depicts an exemplary embodiment of the sensor 20 shown in Figures 1 and 2. The sensor 20 comprises a stationary radar unit 21 and an evaluation unit 22.

The stationary radar unit 21 emits radar radiation Re and detects reflected radiation Rr. The stationary radar unit 21 provides a Doppler signal DS that is indicative of the speed and the direction of objects that have reflected the radar radiation Rr.

As known in the art of Doppler radar sensors, each moving object causes a specific Doppler frequency in the spectrum of the Doppler signal DS. The specific Doppler frequency corresponds to the difference between the frequency of the emitted radar radiation Re and the frequency of the detected reflected radiation Rr. Hereinafter, it is assumed that the specific Doppler frequency is positive if an object is approaching and negative if an object is moving away, since approaching objects cause a frequency shift towards higher frequencies and leaving objects cause a frequency shift towards lower frequencies. The amount of the Doppler frequency is indicative, usually proportional to the speed of the object.

The evaluation unit 22 evaluates the spectrum of the Doppler signal DS in order to identify approaching objects. To this end, the evaluation unit 22 comprises a processor 22a and a memory 22b. The memory 22b stores a computer program CP that defines the technical functions of the evaluation unit 22 and can be carried out by the processor 22a.

As a result of the evaluation of the Doppler signal DS, the evaluation unit 22 determines whether or not the door leaf 11 needs to be opened in order to allow an approaching object to pass the swing door 10 with no or at least minimal delay. If the evaluation unit 22 decides to open the door 10 it generates a trigger signal TS.

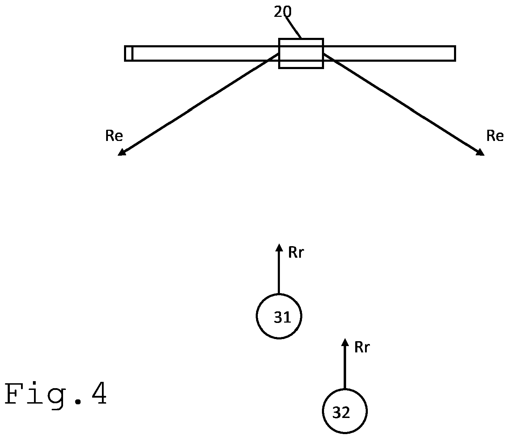

Figure 4 shows the swing door 10 of Figures 1-2 when a first object 31 and a second object 32 approach the swing door 10. Each object 31 and 32 reflects the radar radiation Rr and therefore causes a corresponding Doppler frequency in the spectrum of the Doppler signal DS.

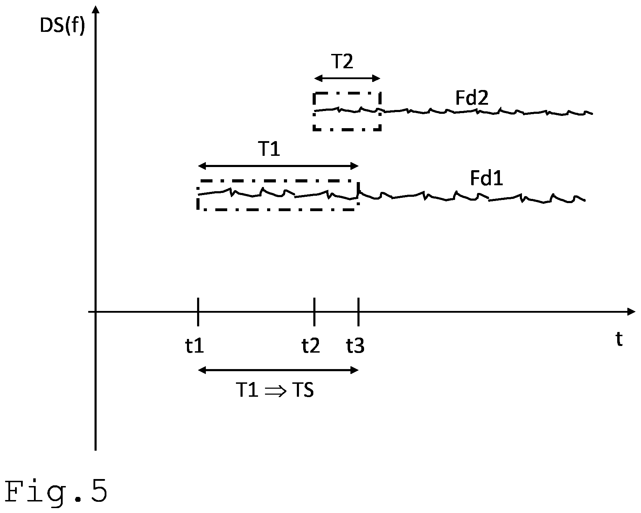

In the exemplary embodiment of Figure 4, the first object 31 is slower than the second object 32 and is detected at a moment t1 (see Figure 5). The second object 32 is detected later at a moment t2 (see Figure 5).

Figure 5 shows the corresponding spectrum DS(f) of the Doppler signal DS over time t with respect to the approaching objects 31 and 32. The Doppler frequency caused by the first object 31 is marked by reference sign Fd1, and the Doppler frequency caused by the second object 32 is marked by reference sign Fd2. Since the speed of the first object 31 is lower than the speed of the second object 32, the Doppler frequency Fd2 of the second object 32 is higher than the Doppler frequency Fd1 of the first object 31.

Sometimes detected objects may not be on a path towards the swing door 10 because they do not intend to pass the swing door 10. Therefore, a premature opening of the swing door 10 could lead to the opening of the door without need.

In order to make sure that the swing door 10 does not open prematurely, but also not too late if the objects indeed intend to pass the swing door 10, the opening is preferably triggered with respect to object-individual timer periods.

The object-individual timer periods are preferably speed-individual delays. The speed-individual delays are preferably shorter for higher speeds and higher doppler frequencies of detected objects and longer for lower speeds and lower doppler frequencies of detected objects. Therefore, in the exemplary embodiment of Figure 5 the object-individual timer period T1 of the first object 31 is longer than the object-individual timer period T2 of the second object 32.

Since the first object 31 has been detected at moment t1 and well before the detection of the second object 32 at moment t2, the first object 31 triggers the opening of the swing door 10 despite the shorter object-individual timer period T2 of the second object 32, upon the expiry of the object-individual timer period T1 at moment t3.

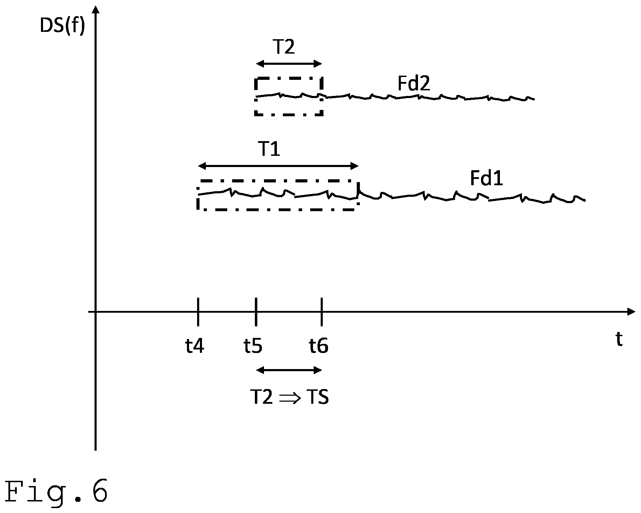

Figure 6 shows another example where the first object 31 is detected before the second object 32. Here, however, the second object 32 triggers the opening of the swing door 10 since its object-individual timer period expires first at moment t6.

As the detection area of the sensor 20 covers the entire area in front of the swing door 10 (see Figures 1 and 2), the obstructing objects can be detected as discussed above. However, since the door leaf 11 is in the sensor's detection area when the swing door 10 is not fully closed, the door leaf 11 also causes a Doppler frequency whenever the door opens or closes.

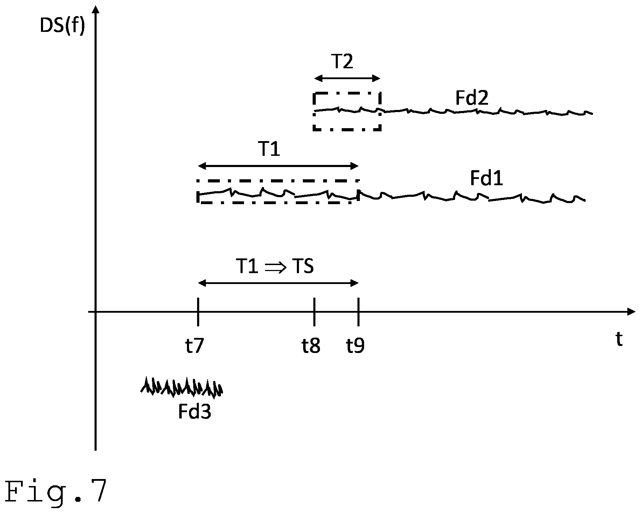

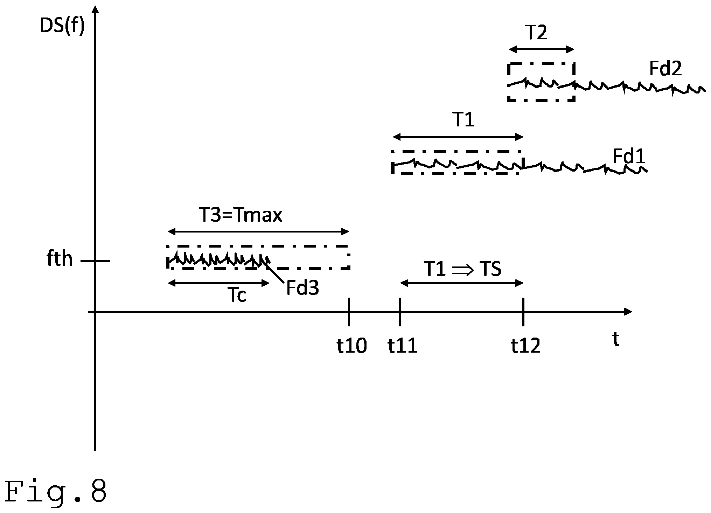

Figures 7 and 8 depict the Doppler frequencies Fd1 and Ffd2 of the two approaching objects 31 and 32 and in addition the Doppler frequency Fd3 that is generated by the moving door leaf 11.

Figure 7 shows the door leaf 11 during the opening phase. Since the door leaves moves away from the sensor 20, the Doppler frequency Fd3 of the door leaf 11 is negative and can therefore be easily distinguished from the positive Doppler frequencies generated by the approaching objects 31 and 32.

Figure 8 shows the door leaf 11 during the closing phase. Here, the Doppler frequency Fd3 of the door leaf 11 is also positive since the door leave approaches the sensor 20. Therefore, the closing door leaf 11 cannot so easily be distinguished from the approaching objects since all Doppler frequencies are positive. For instance, the Doppler frequency Fd3 of the closing door leaf 11 can be identical to the Doppler frequency Fd1 of the approaching object 31.

When the door 10 closes, the evaluation unit 22 needs to take precautions in order avoid that the closing door leaf 11 alone triggers the re-opening of the door leaf 11, because otherwise the swing door 10 would remain open at all times.

In order to make sure that the evaluation unit 22 does not open the swing door 10 in response to the Doppler frequency Fd3 of the closing door leaf 11 the evaluation unit 22 preferably operates as follows:

In response to the detection of each approaching object, the evaluation unit 22 calculates an object-individual timer period $T(i)$. Hereinafter, index i refers to i-th of N detected approaching objects $(0 < i \leq N)$. In the exemplary embodiment of Figure 8, index i=1 is assigned to the first object 31, index i=2 is assigned to the second index i=2, and index i=3 is assigned to the closing door leaf 11.

The evaluation unit 22 preferably calculates the object-individual timer period $T(i)$ for each detected approaching object 31 as follows:

$$T(i) = K / Fd(i) \qquad \text{if } Fd(i) > fth$$

$$T(i) = Tmax \qquad \text{if } Fd(i) \leq fth$$

where $T(i)$ designates the object-individual timer period of the i-th detected object, $Fd(i)$ designates the Doppler frequency of the i-th detected object, fth designates a given threshold frequency, and Tmax designates a given maximum timer value.

The threshold frequency fth preferably corresponds to the speed of the door leaf when the door is being closed. The maximum timer period exceeds (preferably by at least 10 %) the duration Tc of the closing process of the door leaf 11 when the door is being closed from the completely opened state to the completely closed state. Therefore, the closing door leaf 11 alone cannot trigger the opening of the door 10 since the duration Tc of the door's closing cannot exceed the maximum timer value Tmax. Only the first and second object 31 and 32 can trigger the opening of the door 10.

If the radar unit 21 still detects the Doppler frequency that belongs to the respective detected object, after expiry of the respective object-individual timer period, the evaluation unit 22 generates a trigger signal TS that triggers the opening of the swing door 10. Otherwise, it does not trigger the opening with respect to the expired object-individual timer period.

Therefore, in Figure 8, the trigger signal TS is not generated at moment t10 when the object-individual timer period T3 of the door leaf 11 expires. Instead, the trigger signal TS is generated at moment t12 when the object-individual timer period T1 of the first object expires.

In summary, the evaluation unit 22 works as a time-filter which masks the door motion completely and is still open for an approaching pedestrian, due to the simple and practical fact that - in most cases - the field of detection of the sensor 20 is much larger than the extent of the door 10. In other words, the door 10 has to cover much lesser distance (due to its size), than an approaching person, and the Doppler signal DS will disappear quickly, as opposed to a person approaching with intent to pass through the door. The dependence of the length of the time-filter (i.e., the length of the object-individual timer periods) on speed is due to the fact that if an object is approaching at a high speed, the door should respond quickly, otherwise a person can collide with the door once the door starts opening. This approach makes the distance of the person from the door, more or less constant, once the door starts to open, thus avoiding a possibility of collision.

Since different doors have different speeds and dimensions, a calibration may optionally be performed to fine-tune the time-filter length for a particular door. In other words, the optimal threshold frequency fth and the optimal maximum timer value Tmax is preferably determined during a calibration step. A first step of the calibration may be to inform the sensor 20 (through push buttons, remote control, phone app, etc.) that the calibration procedure has started. The next step is to open and close the door, so that the sensor 20 can capture a door signal that relates to the movement of the door. The sensor 20 may then detect the opening and closing time of the door 20 and store it in the memory 22b. Now the length of the filter, i.e. the maximum timer period Tmax, can be calculated as follows:

$$Tmax = k * Tc$$

Wherein Tc designates the closing time of the door and k exceeds 1 (k > 1). The threshold frequency fth is preferably set to correspond to the door's maximal closing speed during the closing process.

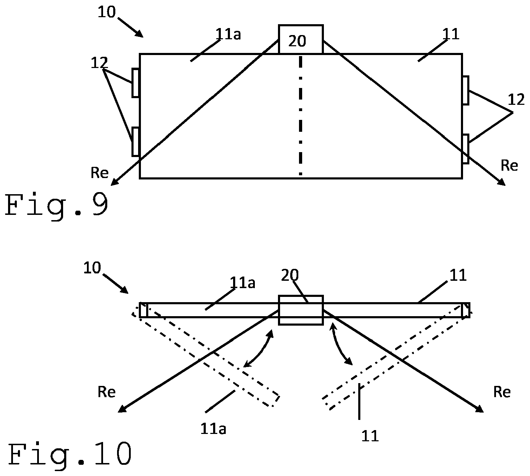

The sensor 20 described above with reference to Figures 1-8 may also be used in connection with a double swing door that comprises two door leaves 11 and 11a. Figures 9 and 10 show such a double swing door and the sensor 20 described above.

The various embodiments and aspects of embodiments of the invention disclosed herein are to be understood not only in the order and context specifically described in this specification, but to include any order and any combination thereof. Whenever the context requires, all words used in the singular number shall be deemed to include the plural and vice versa. Whenever the context requires, all options that are listed with the word "and" shall be deemed to include the word "or" and vice versa, and any combination thereof.

In the drawings and specification, there have been disclosed a plurality of embodiments of the present invention. The applicant would like to emphasize that each feature of each embodiment may be combined with or added to any other of the embodiments in order to modify the respective embodiment and create additional embodiments. These additional embodiments form a part of the present disclosure and, therefore, the applicant may file further patent claims regarding these additional embodiments at a later stage of the prosecution.

Further, the applicant would like to emphasize that each feature of each of the following dependent claims may be combined with any of the present independent claims as well as with any other (one ore more) of the present dependent claims (regardless of the present claim structure). Therefore, the applicant may direct further patent claims towards other claim combinations at a later stage of the prosecution.

**Claims**

1. Sensor (20) configured to detect obstructing objects (31, 32) during the movement of a door leaf (11, 11a), wherein the sensor (20) comprises

   - a stationary radar unit (21) capable of emitting radar radiation (Re) and detecting reflected radiation (Rr), the radar unit (21) being configured to provide a Doppler signal (DS) during operation, and
   - an evaluation unit (22) configured to evaluate the spectrum of the Doppler signal (DS) in order to detect an approaching object (31, 32, 11, 11a),
   - wherein the evaluation unit (22) is configured to calculate an object-individual timer period (T1, T2, T3) in response to the detection of the approaching object (31, 32, 11, 11a), the timer period (T1, T2, T3) depending on the Doppler frequency (Fd1, Fd2, Fd3) that belongs to the detected object (31, 32, 11, 11a),
   - wherein the evaluation unit (22) is configured to start a timer for the detected object (31, 32, 11, 11a) upon its detection, and
   - wherein the evaluation unit (22) is configured to generate a trigger signal (TS) that triggers the opening of the door after expiry of the object-individual timer period (T1, T2, T3) if the radar unit (21) still detects the Doppler frequency (Fd1, Fd2, Fd3) that belongs to the detected object (31, 32, 11, 11a), after expiry of the object-individual timer period (T1, T2, T3).

2. Sensor (20) of claim 1, wherein
   the evaluation unit (22) is configured to set the timer period (T1, T2, T3) to be shorter for higher Doppler frequencies and longer for lower Doppler frequencies.

3. Sensor (20) of any of the preceding claims, wherein
the evaluation unit (22) is configured to calculate the timer period (T1, T2, T3) to be inversely proportional to the Doppler frequency (Fd1, Fd2, Fd3).

4. Sensor (20) of any of the preceding claims, wherein
the evaluation unit (22) is configured to set the timer period (T1, T2, T3) to a given maximum timer value (Tmax) if the Doppler frequency (Fd1, Fd2, Fd3) of the detected object (31, 32, 11, 11a) is smaller than a given threshold frequency (fth) .

5. Sensor (20) of claim 4, wherein
the threshold frequency (fth) corresponds to the speed of the closing door leaf (11, 11a) when the door is being closed.

6. Sensor (20) of any of the preceding claims, wherein
the evaluation unit (22) is configured to set the timer period (T1, T2, T3) to be shorter for higher Doppler frequencies and longer for lower Doppler frequencies if the Doppler frequency (Fd1, Fd2, Fd3) exceeds the threshold frequency (fth), and otherwise assigns the maximum timer value (Tmax) to the timer period (T1, T2, T3).

7. Sensor (20) of any of the preceding claims, wherein
the evaluation unit (22) is configured to calculate the timer period (T1, T2, T3) to be inversely proportional to the Doppler frequency (Fd1, Fd2, Fd3) of the detected object (31, 32, 11, 11a) if the Doppler frequency (Fd1, Fd2, Fd3) exceeds the threshold frequency (fth), and otherwise assigns the maximum timer value (Tmax) to the timer period (T1, T2, T3).

8. Sensor (20) of any of the preceding claims, wherein
the evaluation unit (22) is configured to calculate the object-individual timer period (T1, T2, T3) for the detected object (31, 32, 11, 11a) according to

$$T = K / Fd \text{ if } Fd > fth$$

$$T = Tmax \text{ if } Fd \leq fth$$

where T designates the object-individual timer period of the detected object (31, 32, 11, 11a), Fd designates the Doppler frequency of the detected object (31, 32, 11, 11a), fth designates the threshold frequency, Tmax designates the maximum timer value, and K is a given constant.

9. Sensor (20) of any of the preceding claims,

wherein the evaluation unit (22) is configured to calculate the object-individual timer period (T1, T2, T3) for each detected approaching object (31, 32, 11, 11a),
wherein the evaluation unit (22) is configured to generate a trigger signal (TS) that triggers the opening of the door after expiry of each object-individual timer period (T1, T2, T3), if the radar unit (21) still detects the Doppler frequency (Fd1, Fd2, Fd3) of the respective detected object (31, 32, 11, 11a) after expiry of the respective object-individual timer period (T1, T2, T3), and
wherein the evaluation unit (22) is configured to calculate the object-individual timer period (T1, T2, T3) for each detected approaching object (31, 32, 11, 11a) according to

$$T(i) = K / Fd(i) \qquad \text{if } Fd(i) > fth$$

$$T(i) = Tmax \qquad \text{if } Fd(i) \leq fth$$

where T designates the object-individual timer period of the i-th detected object (31, 32, 11, 11a), Fd designates the Doppler frequency of the i-th detected object (31, 32, 11, 11a), fth designates the threshold frequency, Tmax designates the maximum timer period, and K is a given constant.

10. System comprising a sensor (20) according to any of the preceding claims wherein the sensor (20) is mounted stationary above a swing door.

11. Method of detecting obstructing objects (31, 32) during the movement of a door leaf (11, 11a), the method comprising the steps of

- emitting radar radiation (Re) and detecting reflected radiation (Rr) using a stationary radar unit (21),
- determining a Doppler signal (DS), and
- evaluating the spectrum of the Doppler signal in order to detect an approaching object (31, 32, 11, 11a), wherein
- an object-individual timer period (T1, T2, T3) is calculated in response to the detection of the approaching object (31, 32, 11, 11a), wherein the timer period (T1, T2, T3) depends on the Doppler frequency (Fd1, Fd2, Fd3) that belongs to the detected object (31, 32, 11, 11a),
- a timer is started for the detected object (31, 32, 11, 11a) upon detection of the object (31, 32, 11, 11a), and
- a trigger signal (TS) is generated that triggers the opening of the door after expiry of the object-individual timer period (T1, T2, T3) if the Doppler frequency (Fd1, Fd2, Fd3) that belongs to the detected object (31, 32, 11, 11a), is still detected after expiry of the object-individual timer period (T1, T2, T3).

12. Method of claim 11, wherein

- the Doppler signal (DS) generated by the closing door leaf (11, 11a) is detected when the door leaf (11, 11a) is closed during a calibration step, and
- a threshold frequency (fth) is stored that corresponds to the Doppler frequency (Fd3) of the closing door leaf (11, 11a) and therefore to the speed of the closing door leaf (11, 11a) when the door is closed.

13. Method of claim 12, wherein
during normal operation after the calibration, the timer period (T1, T2, T3) of the detected object (31, 32, 11, 11a) is set to be shorter for higher Doppler frequencies and longer for lower Doppler frequencies, if the Doppler frequency (Fd1, Fd2, Fd3) exceeds the stored threshold frequency (fth), and otherwise a given maximum threshold value is assigned to the timer period (T1, T2, T3).

14. Method of claim 13, wherein

- the object-individual timer period (T1, T2, T3) is calculated for each detected approaching object (31, 32, 11, 11a), and
- a trigger signal (TS) that triggers the opening of the door is generated after expiry of each object-individual timer period (T1, T2, T3) if the Doppler frequency (Fd1, Fd2, Fd3) of the respective object (31, 32, 11, 11a) is still detected after expiry of the respective object-individual timer period (T1, T2, T3).

15. Method of claim 14, wherein the object-individual timer period (T1, T2, T3) is calculated for each detected approaching object (31, 32, 11, 11a) according to

$$T(i) = K / (Fd(i)) \qquad if\ Fd(i) > fth$$

$$T(i) = Tmax \qquad if\ Fd(i) \leq fth$$

where T designates the object-individual timer period of the i-th detected object (31, 32, 11, 11a), Fd designates the Doppler frequency of the i-th detected object (31, 32, 11, 11a), fth designates the threshold frequency, and Tmax designates the maximum timer period.

**Amended claims in accordance with Rule 137(2) EPC.**

1. Sensor (20) configured to detect obstructing objects (31, 32) during the movement of a door leaf (11, 11a), wherein the sensor (20) comprises

- a stationary radar unit (21) capable of emitting radar radiation (Re) and detecting reflected radiation (Rr), the radar unit (21) being configured to provide a Doppler signal (DS) during operation, and

- an evaluation unit (22) configured to evaluate the spectrum of the Doppler signal (DS) in order to detect an approaching object (31, 32, 11, 11a),
- wherein the evaluation unit (22) is configured to calculate an object-individual timer period (T1, T2, T3) in response to the detection of the approaching object (31, 32, 11, 11a), the timer period (T1, T2, T3) depending on the Doppler frequency (Fd1, Fd2, Fd3) that belongs to the detected object (31, 32, 11, 11a),
- wherein the evaluation unit (22) is configured to start a timer for the detected object (31, 32, 11, 11a) upon its detection, and
- wherein the evaluation unit (22) is configured to generate a trigger signal (TS) that triggers the opening of the door after expiry of the object-individual timer period (T1, T2, T3) if the radar unit (21) still detects the Doppler frequency (Fd1, Fd2, Fd3) that belongs to the detected object (31, 32, 11, 11a), after expiry of the object-individual timer period (T1, T2, T3),

**characterized in that**

the evaluation unit (22) is configured to set the timer period (T1, T2, T3) to a given maximum timer value (Tmax) if the Doppler frequency (Fd1, Fd2, Fd3) of the detected object (31, 32, 11, 11a) is smaller than a given threshold frequency (fth), and
the threshold frequency (fth) corresponds to the speed of the closing door leaf (11, 11a) when the door is being closed.

2. Sensor (20) of claim 1, wherein
the evaluation unit (22) is configured to set the timer period (T1, T2, T3) to be shorter for higher Doppler frequencies and longer for lower Doppler frequencies.

3. Sensor (20) of any of the preceding claims, wherein
the evaluation unit (22) is configured to calculate the timer period (T1, T2, T3) to be inversely proportional to the Doppler frequency (Fd1, Fd2, Fd3).

4. Sensor (20) of any of the preceding claims, wherein
the evaluation unit (22) is configured to set the timer period (T1, T2, T3) to be shorter for higher Doppler frequencies and longer for lower Doppler frequencies if the Doppler frequency (Fd1, Fd2, Fd3) exceeds the threshold frequency (fth), and otherwise assigns the maximum timer value (Tmax) to the timer period (T1, T2, T3).

5. Sensor (20) of any of the preceding claims, wherein
the evaluation unit (22) is configured to calculate the timer period (T1, T2, T3) to be inversely proportional to the Doppler frequency (Fd1, Fd2, Fd3) of the detected object (31, 32, 11, 11a) if the Doppler frequency (Fd1, Fd2, Fd3) exceeds the threshold frequency (fth), and otherwise assigns the maximum timer value (Tmax) to the timer period (T1, T2, T3).

6. Sensor (20) of any of the preceding claims, wherein

the evaluation unit (22) is configured to calculate the object-individual timer period (T1, T2, T3) for the detected object (31, 32, 11, 11a) according to

$$T = K \;/\; Fd \;\; if \;\; Fd > fth$$

$$T = Tmax \;\; if \;\; Fd \leq fth$$

where T designates the object-individual timer period of the detected object (31, 32, 11, 11a), Fd designates the Doppler frequency of the detected object (31, 32, 11, 11a), fth designates the threshold frequency, Tmax designates the maximum timer value, and K is a given constant.

7. Sensor (20) of any of the preceding claims,

wherein the evaluation unit (22) is configured to calculate the object-individual timer period (T1, T2, T3) for each detected approaching object (31, 32, 11, 11a),
wherein the evaluation unit (22) is configured to generate a trigger signal (TS) that triggers the opening of the door after expiry of each object-individual timer period (T1, T2, T3), if the radar unit (21) still detects the Doppler frequency (Fd1, Fd2, Fd3) of the respective detected object (31, 32, 11, 11a) after expiry of the respective object-individual timer period (T1, T2, T3), and

wherein the evaluation unit (22) is configured to calculate the object-individual timer period (T1, T2, T3) for each detected approaching object (31, 32, 11, 11a) according to

$$T(i) = K / Fd(i) \qquad if\ Fd(i) > fth$$

$$T(i) = Tmax \qquad if\ Fd(i) \leq fth$$

where T designates the object-individual timer period of the i-th detected object (31, 32, 11, 11a), Fd designates the Doppler frequency of the i-th detected object (31, 32, 11, 11a), fth designates the threshold frequency, Tmax designates the maximum timer period, and K is a given constant.

8. System comprising a sensor (20) according to any of the preceding claims wherein the sensor (20) is mounted stationary above a swing door.

9. Method of detecting obstructing objects (31, 32) during the movement of a door leaf (11, 11a), the method comprising the steps of

- emitting radar radiation (Re) and detecting reflected radiation (Rr) using a stationary radar unit (21),
- determining a Doppler signal (DS), and
- evaluating the spectrum of the Doppler signal in order to detect an approaching object (31, 32, 11, 11a), wherein
- an object-individual timer period (T1, T2, T3) is calculated in response to the detection of the approaching object (31, 32, 11, 11a), wherein the timer period (T1, T2, T3) depends on the Doppler frequency (Fd1, Fd2, Fd3) that belongs to the detected object (31, 32, 11, 11a),
- a timer is started for the detected object (31, 32, 11, 11a) upon detection of the object (31, 32, 11, 11a), and
- a trigger signal (TS) is generated that triggers the opening of the door after expiry of the object-individual timer period (T1, T2, T3) if the Doppler frequency (Fd1, Fd2, Fd3) that belongs to the detected object (31, 32, 11, 11a), is still detected after expiry of the object-individual timer period (T1, T2, T3),
**characterized in that**
- the Doppler signal (DS) generated by the closing door leaf (11, 11a) is detected when the door leaf (11, 11a) is closed during a calibration step, and
- a threshold frequency (fth) is stored that corresponds to the Doppler frequency (Fd3) of the closing door leaf (11, 11a) and therefore to the speed of the closing door leaf (11, 11a) when the door is closed.

10. Method of claim 9, wherein
during normal operation after the calibration, the timer period (T1, T2, T3) of the detected object (31, 32, 11, 11a) is set to be shorter for higher Doppler frequencies and longer for lower Doppler frequencies, if the Doppler frequency (Fd1, Fd2, Fd3) exceeds the stored threshold frequency (fth), and otherwise a given maximum threshold value is assigned to the timer period (T1, T2, T3).

11. Method of claim 10, wherein

- the object-individual timer period (T1, T2, T3) is calculated for each detected approaching object (31, 32, 11, 11a), and
- a trigger signal (TS) that triggers the opening of the door is generated after expiry of each object-individual timer period (T1, T2, T3) if the Doppler frequency (Fd1, Fd2, Fd3) of the respective object (31, 32, 11, 11a) is still detected after expiry of the respective object-individual timer period (T1, T2, T3).

12. Method of claim 11, wherein

the object-individual timer period (T1, T2, T3) is calculated for each detected approaching object (31, 32, 11, 11a) according to

$$T(i) = K / (Fd(i)) \qquad if\ Fd(i) > fth$$

$$T(i) = Tmax \qquad\qquad if\ Fd(i) \leq fth$$

where T designates the object-individual timer period of the i-th detected object (31, 32, 11, 11a), Fd designates the Doppler frequency of the i-th detected object (31, 32, 11, 11a), fth designates the threshold frequency, and Tmax designates the maximum timer period.

$$T(i) = Tmax \qquad\qquad if\ Fd(i) \leq fth$$

Fig.1

Fig.2

Fig.3

Fig.4

Fig.5

EP 4 585 968 A1

EP 4 585 968 A1

Fig.6

Fig.7

Fig.8

Fig.9

Fig.10

Application Number

EP 24 15 1602

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/323723 A1 (GUEVARA ROSAS JORGE I [US] ET AL) 12 October 2023 (2023-10-12) | 1-4,6-11 | INV. G01S13/56 |
| A | * abstract; figures 1, 6, 15-18, 21, 22 * * paragraphs [0034] - [0037], [0042], [0043], [0055], [0091], [0101] - [0111] * | 5,12-15 | G01S7/41 G01S13/93 G01S7/40 E05F15/73 |
| A | US 2019/218068 A1 (SEKI HISANORI [JP] ET AL) 18 July 2019 (2019-07-18) * the whole document * | 1-15 | |
| A | US 4 009 476 A (LUTZ ERNO B) 22 February 1977 (1977-02-22) * abstract; figures 2-4 * * column 1, lines 5-13 * * column 2, lines 10-59 * * column 7, line 65 - column 8, line 24 * | 1-15 | |

TECHNICAL FIELDS SEARCHED (IPC)

G01S
E05F
E05G

The present search report has been drawn up for all claims

| Place of search | Date of completion of the search | Examiner |
|---|---|---|
| Munich | 13 June 2024 | Lupo, Emanuela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 15 1602

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2024

| Patent document cited in search report | Publication date | Patent family member(s) | Publication date |
|---|---|---|---|
| US 2023323723 A1 | 12-10-2023 | NONE | |
| US 2019218068 A1 | 18-07-2019 | CN 110027975 A | 19-07-2019 |
| | | DE 102019200351 A1 | 18-07-2019 |
| | | US 2019218068 A1 | 18-07-2019 |
| US 4009476 A | 22-02-1977 | NONE | |

EPO FORM P0459

For more details about this annex : see Official Journal of the European Patent Office, No. 12/82